# EUROPEAN PATENT SPECIFICATION

(11) **EP 3 556 924 B1**
(45) Date of publication and mention of the grant of the patent: **06.08.2025**
(21) Application number: 17879979.7
(22) Date of filing: 12.12.2017
(51) Int. Cl.: D06F 58/20, D06F 73/02, D06F 35/00, D06F 58/10, F04D 1/00, F04D 13/02

(54) **PUMP FOR CLOTHES TREATING DEVICE**
PUMPE FÜR KLEIDUNGSBEHANDLUNGSVORRICHTUNG
POMPE POUR DISPOSITIF DE TRAITEMENT DE VÊTEMENTS

(30) Priority: 16.12.2016 KR 20160172479
(43) Date of publication of application: 23.10.2019
(73) Proprietor: LG Electronics Inc., Seoul 07336 (KR)
(72) Inventor: KIM, Jaehyung, Seoul 08592 (KR); KANG, Hyungha, Seoul 08592 (KR); JANG, Semin, Seoul 08592 (KR); JUNG, Joosik, Seoul 08592 (KR)
(74) Representative: Vossius & Partner Patentanwälte Rechtsanwälte mbB
(86) International application number: PCT/KR2017/014527
(87) International publication number: WO 2018/110935

(56) References cited:
- EP-A1- 2 055 827
- WO-A1-2007/058477
- WO-A1-2010/145869
- DE-A1- 102015 209 529
- JP-A- H10 300 279
- KR-A- 20070 059 433
- KR-A- 20110 099 914
- KR-A- 20110 127 419
- KR-B1- 101 025 495
- KR-U- 930 019 831
- US-A- 2 643 614

## Description

### [FIELD]

The present invention relates to a pump assembly and a clothes treating apparatus.

### [BACKGROUND]

In general, a clothes treating apparatus is a home appliance configured to perform such diverse treating processes that are related with clothes (e.g., washing, drying, deodorizing, wrinkle-removing and the like). The clothes treating apparatus means a concept including a washing machine for washing clothes, a dryer for drying wet clothes and a refresher for deodorizing the bad smell pervaded in clothes or removing wrinkles of clothes.

A conventional structure of such a clothes treating apparatus is disclosed in Korean Patent No. 10-2008-0030333. US 2 643 614 A discloses a pump assembly according to the preamble of claim 1. DE 10 2015 209529 A1 and WO 2007/058477 A1 disclose related technology.

Meanwhile, the clothes treating apparatuses tend to develop as one device to solve washing, drying, deodorizing and wrinkles-removing. Especially, a water supply system and a water discharge system which are provided in the clothes treating apparatus may require pumps configured to generate flux, respectively. Here, as many functions are combined in one device, the overall volume of the clothes treating apparatus will increase disadvantageously.

### DETAILED DESCRIPTION OF THE INVENTION

### TECHNICAL PROBLEM

An object of the present invention is to provide a clothes treating apparatus which may perform an independent cycle for each of passages by installing one pump assembly in the passages.

Another object of the present invention is to provide a clothes treating apparatus which may generate flow of a passage in a water supply pipe or a water discharge pipe according to a rotational direction of a motor.

A further object of the present invention is to provide a clothes treating apparatus which may reduce an installation space.

A further object of the present invention is to provide a clothes treating apparatus which may save the cost of materials.

A further object of the present invention is to provide a clothes treating apparatus which may consume less energy in the driving.

### TECHNICAL SOLUTION

The invention is specified by the independent claims. Preferred embodiments are defined in the dependent claims. The clothes treating apparatus which may perform an independent cycle for each of passages by installing one pump assembly in the passages. In addition, the clothes treating apparatus may reduce an installation space and save the cost of materials.

The clothes treating apparatus may generate flow of a passage in the water supply pipe or the water discharge pipe according to the rotational direction of the motor.

The pair of the clutches may comprise a first clutch provided in one side of the wheel; and a second clutch provided in the other side of the wheel, and the connecting arm comprises a first connecting arm and a second connecting arm that are spaced a preset distance apart from the rotational center of the wheel and symmetrically arranged with respect to the rotational center. The clothes treating apparatus may generate flow of a passage in the water supply pipe or the water discharge pipe according to the rotational direction of the motor.

Each of the connecting arms may comprise a connecting bar rotatably coupled to the wheel and provided in parallel with the shaft; a first hand provided in one end of the connecting bar; and a second hand provided in the other end of the connecting bar, and the first hand rotates the first clutch by contacting with the first clutch, and the second hand rotates the second clutch by contacting with the second clutch. The clothes treating apparatus which may perform an independent cycle for each of passages by installing one pump assembly in the passages. In addition, the clothes treating apparatus may save the energy.

When the motor is rotated in one direction, the first hand may contact with the first clutch and the second hand may not contact with the second clutch, and when the motor is rotated in the reverse direction, the first hand may not contact with the first clutch and the second hand may contact with the second clutch.

The first clutch may comprise a first projection projected towards the wheel and contactable with the first hand, and the second clutch may comprise a second projection projected towards the wheel and contactable with the second hand.

Two first projections may be symmetrically provided with respect to the rotational center of the first clutch, and two second projections may be symmetrically provided with respect to the rotational center of the second clutch. When the rotational direction of the motor is changed, the change of the passage may be performed stably.

Each of the first and second projections may comprise a contact surface that is contactable with the first hand or the second hand; and a collision surface provided to collide with the first hand or the second hand. When the rotational direction of the motor is changed, the change of the passage may be performed stably.

The contact surface may have a larger area than the collision surface. The change of the passage may be performed stably.

The first hand and the second hand may be perpendicular with each other with respect to one of the connecting arms. The structure may be the optimal structure for the efficient passage change.

Each of the first and second hands may comprise a planar surface provided in a predetermined area and a curved surface provided in the other area. That is necessary in the passage change.

When the wheel is rotated in one direction, the planar surfaces of the first hands may contact with the contact surfaces of the first projections, respectively, and the second hands may not contact with the second projections.

When the wheel is rotated in the reverse direction, the planar surfaces of the second hands may contact with the contact surfaces of the second projections and the first hands may not contact with the first projections.

When the wheel is rotated in the reverse direction after rotated in one direction for a preset time period, the curved surfaces of the first hands may collide with the collision surfaces of the first projections and the connecting bars may be then rotated.

The rotation of the connecting bars may facilitate contact between the planar surfaces of the second hands and the contact surfaces of the second projections, and the first hands may not contact with the first projections.

The clothes treating apparatus may further comprise a steam supply device configured to supply steam to the clothes-accommodation unit; and a heat pump configured to generate hot air.

The impeller may comprise a first impeller connected with the water supply pipe; and a second impeller connected with the water discharge pipe, and the first impeller and the second impeller may not be rotated at the same time.

A pump assembly according to the invention is defined in claim 1.

The pair of the clutches may comprise a first clutch provided in one side of the wheel; and a second clutch provided in the other side of the wheel, and the connecting arm comprises a first connecting arm and a second connecting arm that are spaced a preset distance apart from the rotational center of the wheel and symmetrically arranged with respect to the rotational center.

### ADVANTAGEOUS EFFECTS

As is apparent from the above description, the present disclosure has the effect of providing a clothes treating apparatus which may perform an independent cycle for each of passages by installing one pump assembly in the passages.

In addition, the present disclosure has the effect of providing a clothes treating apparatus which may generate flow of a passage in a water supply pipe or a water discharge pipe according to a rotational direction of a motor.

In addition, the present disclosure has the effect of providing a clothes treating apparatus which may reduce an installation space.

In addition, the present disclosure has the effect of providing a clothes treating apparatus which may save the cost of materials.

In addition, the present disclosure has the effect of providing a clothes treating apparatus which may consume less energy in the driving

### BRIEF DESCRIPTION OF THE DRAWINGS

FIG. 1 is a perspective diagram of a clothes treating apparatus in accordance with one embodiment of the present disclosure;
FIG. 2 is a diagram illustrating a conventional structure of a mechanical chamber provided in the clothes treating apparatus;
FIG. 3 is a diagram illustrating a conventional structure of a pump assembly provided in the mechanical chamber; and
FIG. 4 is a diagram illustrating a structure of a mechanical chamber provided in the clothes treating apparatus in accordance with one embodiment of the present disclosure;
FIG. 5 is a diagram illustrating an exterior design of a pump assembly in accordance with one embodiment;
FIG. 6 is a an exploded perspective diagram partially illustrating the pump assembly in accordance with the embodiment;
FIG. 7 is a diagram illustrating the inside of the pump assembly in accordance with the embodiment;
FIG. 8 is a bottom view illustrating the pump assembly of FIG. 7 in accordance with the embodiment;
FIG. 9 is a perspective diagram of the pump assembly, specifically, one example of an operation when a motor is rotated in one direction;
FIG. 10 is a perspective diagram of the pump assembly, specifically, one example of an operation when a motor is rotated in the reverse direction;
FIG. 11 is a perspective diagram of the pump assembly in accordance with the embodiment, specifically, illustrating some components to describe one example of an operation when the motor is rotated in one direction;
FIG. 12 is a sectional diagram illustrating one example of an example of an operation when the pump assembly in accordance with the embodiment is rotated in one direction;
FIG. 13 is a sectional diagram illustrating one example of an operation when the pump assembly in accordance with the embodiment is rotated in one direction, specifically, a state after a preset time period, compared with FIG. 12; and
FIG. 14 is a sectional diagram illustrating one example of an operation when the pump assembly in accordance with the embodiment is rotated in one direction, specifically, a state after a preset time period, compared with FIG. 13.

### DESCRIPTION OF SPECIFIC EMBODIMENTS

Reference will now be made in detail to the preferred embodiments of the present invention, examples of which are illustrated in the accompanying drawings. It should be noted herein that construction of an apparatus, which will hereinafter be described, and a control method of the apparatus are given only for illustrative purposes and the protection scope of the invention is not limited thereto. Wherever possible, the same reference numbers will be used throughout the drawings to refer to the same or like parts.

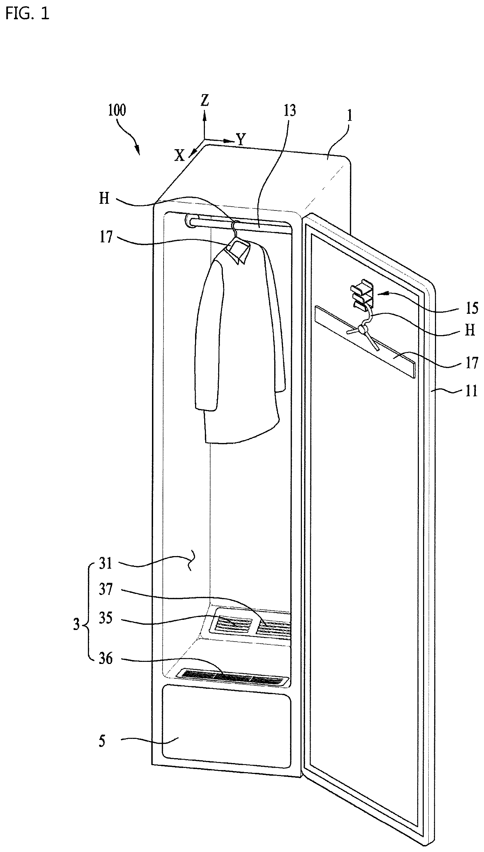

As shown in FIG. 1, the clothes treating apparatus 100 in accordance with one embodiment of the present disclosure includes a cabinet 1 defining an exterior design; a clothes-accommodation unit 3 provided in the cabinet 1 and providing a predetermined space for holding clothes or laundry; a mechanical chamber 5 configured to supply at least one of the air or moisture to the clothes-accommodation unit 3; and a pump assembly 7 configured to supply or discharge water.

A predetermined space (hereinafter, an accommodation space 31) may be defined in the clothes-accommodation unit 3 to accommodate clothes or laundry and the accommodation space 31 may be open and closed by a door 11 provided in the cabinet 1.

A laundry support unit may be further provided in the cabinet 1 to support the clothes or laundry. The laundry support unit may include a first laundry support part 13 provided in the accommodation space 31; and a second laundry support part 15 provided in the door 11.

The first laundry support part 13 may be provided in a bar shape provided along a depth direction of the accommodation space 31 (a direction of X-axis) width direction of the accommodation space (a direction of Y-axis or a width direction of the door). FIG. 1 illustrates one example of the first laundry support part 13 that is provided along the width direction of the accommodation space 31.

In this instance, clothes may be supported by a hook (H) of a hanger 17 provided in the first laundry support part 13 or they may be supported in the first laundry support part 13 without the hanger 17. In any cases, clothes may be kept spread and unfolded in the accommodation space 31.

The second laundry support part 15 may be provided in the door 11 to allow the clothes located in a state of being spread in the accommodation space 31. In other words, the second laundry support part 15 is fixed to the door 11 as shown in FIG. 1. A hook (H) provided in the hanger 17 may be supported to the second laundry support part 15.

The mechanical chamber 5 may be provided in a lower area of the accommodation space 31 and partitioned off from the accommodation space 31 by a partition wall. In this instance, a passage is formed to supply the dry air and steam generated in the mechanical chamber 5 to the accommodation space 31.

The dry air generated in the mechanical chamber 5 may be discharged into the accommodation space 31 via an air outlet hole 35 and the dry air discharged into the accommodation space 31 may contact with the clothes and drawn into the mechanical chamber 5 via an air inlet unit 36.

The air outlet hole 35 and the air inlet unit 36 may be provided in the partition wall for partition off the space into the accommodation space 31 and the mechanical chamber 5 or a lateral or upper surface of the accommodation space 31 or the door 11. In FIG. 1, the air outlet hole 35 and the air inlet unit 36 may be provided in a bottom surface of the accommodation space 31, in other words, the partition wall but the embodiment is not limited thereto.

In this embodiment, the air inlet unit 36 may be provided in a front area of the bottom surface of the accommodation space 31, in other words, adjacent to the door 11. The air inlet unit 36 is provided adjacent to the door 11 and may serve as air curtain. When the door 11 is open and closed, external air will not affect the internal space. The air outlet hole 35 may be provided as far from the air inlet unit 36 as possible such that the discharged air can be supplied to the accommodation space 31 uniformly.

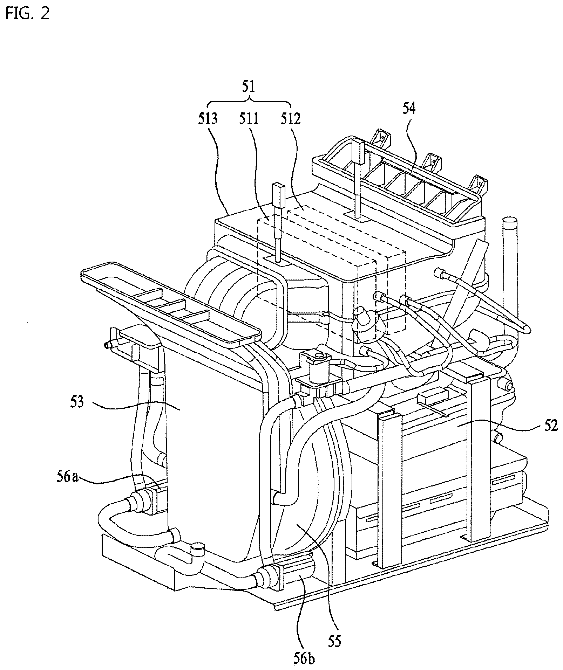

A steam outlet hole 37 may be further provided in the lower area of the accommodation space 31. The steam generated in a steam generator (52, see FIG. 2) provided in the mechanical chamber 5 may be supplied to the clothes held in the accommodation space 31 via the steam outlet hole 37.

The steam outlet hole 37 may be provided in any areas in the accommodation space 31. It may be provided in the lateral surface of the accommodation space 31 or both of the lateral and bottom surfaces.

FIG. 2 illustrates devices that are provided in the mechanical chamber 5. The structure of the mechanical chamber may be similar to the structure of a conventional mechanical chamber 5 including a pump 56 configured of a water supply pump 56a and a water discharge pump 56b.

In the mechanical chamber 5 may be provided a heat pump 51 configured to generate dry air by lowering the humidity and temperature of the air; a steam generator 52 configured to generate the steam which will be supplied to the accommodation space 31; a first duct 53 provided in the lower area of the accommodation space 31 and communicable with the air inlet unit 36; and a second duct 54 provided in the lower area of the accommodation space 31 and communicable with the air outlet hole 35, having the heat pump 51 therein. The first duct 53 and the second duct 54 may be in communication with each other. The flow of the air may be facilitated by the actuation of the fan 55 provided in the mechanical chamber 5.

When describing the flow of the air, the internal air of the accommodation space 31 may be drawn into the first duct 53 via the air inlet unit 36 and then drawn into the second duct 54 from the first duct 53 to pass through the heat pump 51. After passing through the heat pump 51, the air may be discharged into the accommodation space 31 via the air outlet hole 35 again.

The heat pump 51 may be provided in a heat pump body 513 provided in the second duct 54. An evaporator 511 and a condenser 512 may be sequentially installed in the heat pump body 513.

The evaporator 511 is a device configured to pass a low-temperature liquid refrigerant there through and lower the temperature of the surrounding air by sucking heat from the air. The condenser 512 is the device configured to pass a high-temperature gas refrigerant there through and raise the temperature of the surrounding air.

The air drawn into the heat pump body 513 may sequentially pass through the evaporator 511 and the condenser 512. The internal air of the accommodation space 31 has a high humidity or a relatively low temperature because of the mutual action with the clothes. The air has the temperature and moisture to become lowered and condensed, while passing the evaporator 511. After that, the air has the temperature to rise again while passing the condenser 512. Specifically, the heat pump 51 may generate dry-and-high-temperature air.

Meanwhile, the pump 56 may be further provided in the mechanical chamber 5. The pump 56 may include the water supply pump 56a configured to supply moisture to the inside of the clothes treating apparatus 100; and the water discharge pump 56b configured to discharge water from the inside of the clothes treating apparatus 100.

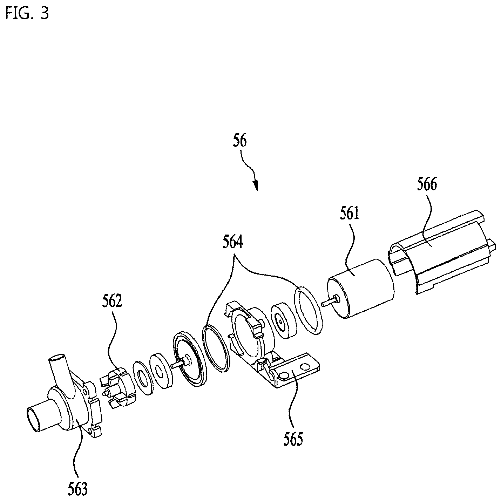

Specific structures of the pumps are shown in FIG. 3. Each of the pumps 56a and 56b may include an impeller 562 configured to generate flux; a motor 561 configured to rotate the impeller 562; and a flow path pipe 563 in which the impeller 562 is arranged. The motor 561 has a motor bracket 565 provided to mount the motor; and a ring 564 provided to absorb a shock between the motor 561 and the motor bracket 565. To protect the motor 561 mounted in the motor bracket 565, a motor case 566 may be provided on an outer area of the motor. When the motor 561 rotates, the impeller 562 may be rotated and the rotation of the impeller 562 may facilitate the water supply and discharge. Only when the impeller 562 is rotated, the flux may occur. Accordingly, the motor may rotate in any directions.

Meanwhile, the clothes treating apparatus 100 in accordance with the embodiment may perform washing as well as drying, deodorizing and wrinkles-removing. In other words for the washing, the clothes treating apparatus 100 may include a tub provided to hold laundry; a drum rotatably mounted in the tub; and a drive unit configured to rotate the drum.

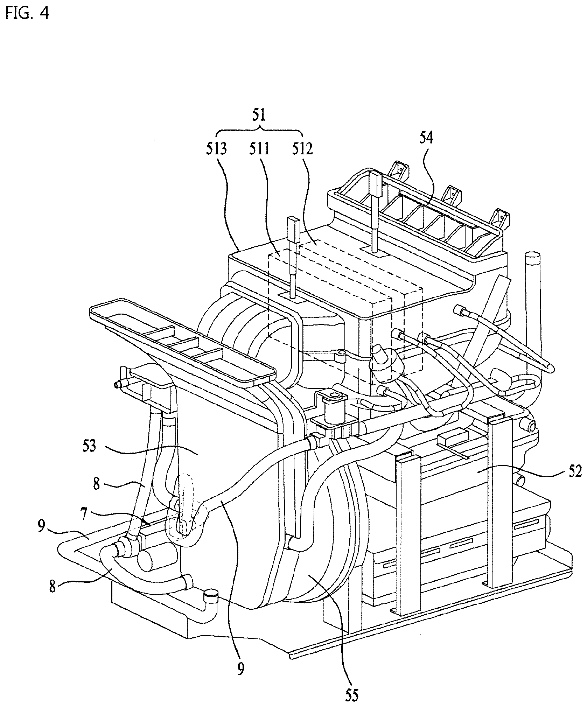

Specifically, the embodiment of the present disclosure may be applied to any types of the clothes treating apparatuses 100 having the water supply and discharge applied thereto. FIG. 4 illustrates the pump assembly 7 provided in the mechanical chamber 5 in accordance with one embodiment of the present disclosure. However, the embodiment shown in FIG. 4 is one of examples and the pump assembly 7 may be separated from the mechanical chamber 5 as the independent part or in one of the other areas. As described above, the pump assembly 7 may be applied to the clothes treating apparatus 100 requiring the water supply and discharge system.

FIG. 4 illustrates that the pump assembly 7 in accordance with the embodiment is provided in the mechanical chamber 5. The conventional components provided in the mechanical chamber 4 are equal to those that are shown in FIG. 2 and only different features from the embodiment shown in FIG. 2 will be described accordingly.

Different from FIG. 2, FIG. 4 shows only one pump. In other words, only pump assembly 7 may realize both the water supply and the water discharge. The pump assembly 7 has one end connected with a water supply pipe 8 and the other end connected with a water discharge pipe 9.

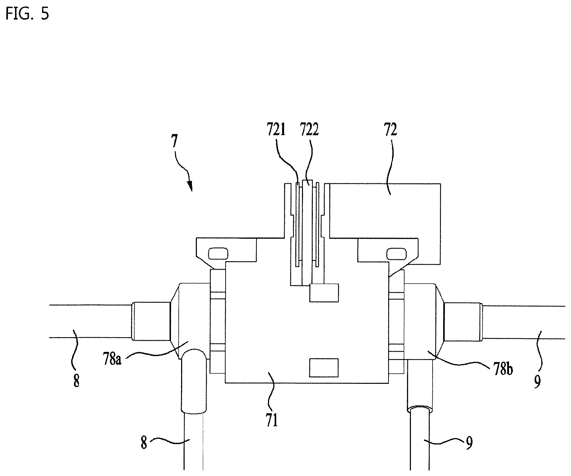

The pump assembly 7 includes a motor (72, see FIGS. 5 through 8). When the motor is rotated in one direction, the pump assembly 7 may generate flux in the water supply pipe 8. It may generate flux in the water discharge pipe 9 when the motor is rotated in the reverse direction. As describing the conventional pump structure shown in FIG. 3, the flux or fluidal flow is generated in the passage only when the motor is rotated, regardless of the rotational direction of the motor. On the other hand, the pump assembly 7 in accordance with the embodiment of the present disclosure may effectively perform an independent cycle of each passage based on the direction of the motor 72.

The specific structure of the pump assembly 7 will be described, referring to FIGS. 5 through 8. FIGS. 5 through 8 illustrate only the pump assembly 7 separately and include a front view, an exploded view and a top view.

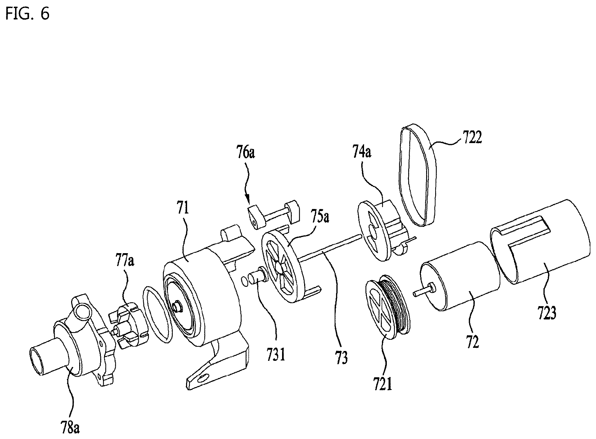

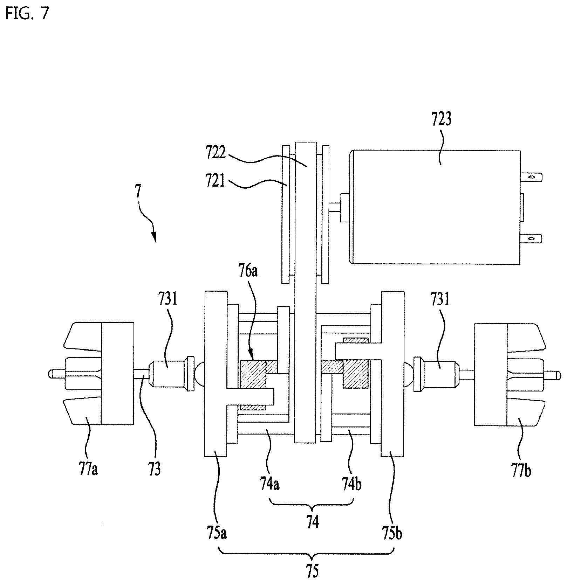

FIG. 5 illustrates the exterior appearance of the pump assembly 7. Referring to FIG. 5, the pump assembly 7 may include a pump housing 71; a motor 72; a first passage pipe 78a connected with the water supply pipe 8 and having a first impeller (77a, see FIGS. 6 and 7) arranged therein; and a second passage pipe 78b connected with the water discharge pipe 9 and having a second impeller (77b, see FIG. 7) arranged therein.

The rotational force of the motor 72 may be transmitted to a drive pulley 721 and a belt 722 connected with the drive pulley 721 may transmit the rotational force to a wheel (74, see FIGS. 6 and 7).

The internal configuration of the pump housing 71 will be described, referring to FIG. 6 and 7.

FIG. 6 is an exploded perspective diagram partially illustrating the pump assembly 7, specifically, the water supply pipe 8. The structure of the water discharge pipe 9 is equal to that of the water supply pipe 8 and the internal structure of the pump assembly 7 in the water supply pipe 8 is symmetrical to that of the pump assembly 7 in the water supply pipe 8.

The rotational force of the motor 72 may be transmitted to the wheel 74 via the drive pulley 721 and the belt 722. The wheel 74 may include a first wheel 74a provided closer to the water supply pipe 8 and a second wheel (74b, see FIG. 7) provided closer to the water discharge pipe 9. In other words, both of first and second wheels 74a and 74b may be integrally formed with each other as one body or coupled to each other. In other words, the rotational force of the belt 722 may be supplied with the wheels 74a and 74b.

The pump assembly 7 further includes a clutch 75 configured to be supplied with the rotational force of the wheels 74a and 74b. The clutch 75 includes a first clutch 75a provided adjacent to the first wheel 74a; and a second clutch 75b provided adjacent to the second wheel 74b.

The clutch 75 receives the rotational force of the wheel 74 via a connecting arm 76. The example of the operation configured to transmit the rotational force of the wheel 74 to the clutches 75 via the connecting arm 76 will be described later.

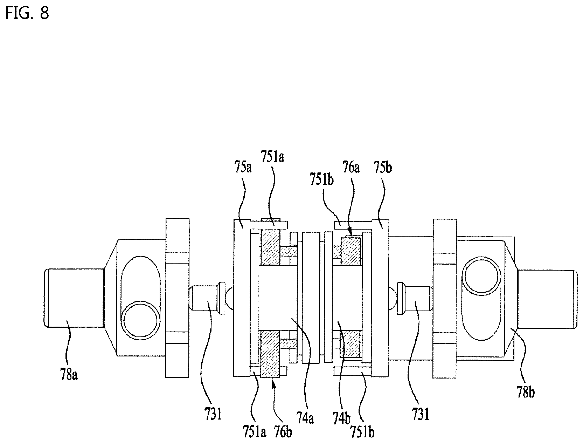

The connecting arm 76 may include a first connecting arm 76a; and a second connecting arm (76b, see FIG. 8). The rotational force of the wheel 74 may be transmitted to the clutches 75 by the mutual action between the first and second clutches 75a and 75b.

Meanwhile, the clutch 75a and 75b receiving the rotational force from the connecting arm 76a and 76b rotate the impeller 77a and 77b connected with the shaft 73.

Once the first clutch 75a is rotated, the shaft 73 provided in the center of the first clutch 75a in a state of being connected with the first clutch 75a may be rotated and the first impeller 77a connected with the shaft 73 may be then rotated. Also, once the second clutch 75b is rotated, the shaft 73 provided in the center of the second clutch 75b in a state of being connected with the second clutch 75b may be rotated and the second impeller 77b connected with the shaft 73 may be then rotated. The shaft 73 connected with the first clutch 75a may be separated from the shaft 73 connected with the second clutch 75b and they may be rotated independently.

A shaft bearing 731 may be provided on each shaft 73 and the shaft bearings 731 may be located in the pump housing 71 provided between the impeller 77a and 77b and the clutch 75a and 75b, respectively. That is to reduce the friction between the pump housing 71 and the shaft when the shaft 73 is rotated.

Meanwhile, a motor bracket 723 may be further provided in an outer area of the motor 72 to protect the motor 72.

FIG. 7 is a front view illustrating the inside of the pump assembly 7, except the pump housing 71, which is corresponding to a state where all of the components are assembled.

When the motor 72 is rotated in one direction, the wheel 74a and 74b may be rotated by the belt 722 having received the rotational force of the motor 72. The first wheel 74a and the second wheel 74b are fixedly coupled to each other to form one body such that they may be rotary in the same direction when being rotated.

A connecting arm 76 rotatably coupled to the wheel 74a and 74b. As shown in FIG. 8, the first connecting arm 76a and the second connecting arm 76b may be spaced a preset distance apart from the center of the wheel 74. The first connecting arm 76a and the second connecting arm 76b may be symmetrically arranged with respect to the center of the wheel 74.

The two connecting arms 76a and 76b may be arranged over the first and second wheels 74a and 74b. In other words, halves of the connecting arms 76a and 76b may be provided in the first wheel 74a and the other halves may be provided in the second wheel 74b.

The connecting arms 76a and 76b may be rotatable on their axis that is in parallel with the axis of the wheel 74. The rotation of the connecting arm 76a and 76b generates contact with the first clutch 75a or the second clutch 75b. Specifically, when the motor 72 is rotated in one direction, the first connecting arm 76a and the second connecting arm 76b may rotate the first clutch 75a by the contact with the first clutch 75a. When the motor 72 is rotated in the reverse direction, the first connecting arm 76a and the second connecting arm may rotate the second clutch 75b by the contact with the second clutch 75b.

Specifically, since the connecting arms 76a and 76b may contact with the clutch 75a and 75b, the rotation range is limited. The specific structure of the connecting arm 76a and 76b will be described later.

FIG. 8 is a bottom view of FIG. 7, viewed from the bottom, and illustrates both of the first and second connecting arms 76a and 76b. As mentioned above, each of the first and second connecting arms 76a and 76b may be spaced a preset distance apart from the center of the wheel 74, respectively. The distances between the connecting arms and the center of the wheel 74 are the same.

The first clutch 75a includes a first projection 751a and the second clutch 75b includes a second projection to transmit the rotational force to the connecting arms 76a and 76b. The first and second projections 751 and 751b may become the means for the contact of the clutches with the connecting arms 76a and 76b, respectively.

Each of the first and second projections 751a and 751b may include two projections. The first projections 751a may be projected towards the second clutch 75b, in parallel with the rotational direction of the first clutch 75a. The two first projections 751a may be symmetrically arranged with respect to the rotational center of the first clutch 75a. Accordingly, a virtual line between the two first projections 751a may pass through the rotational center of the first clutch 75a. Meanwhile, the first projections 751a may be provided in an edge area of the first clutch 75a.

The second projections 751b may be projected towards the first clutch 75a, in parallel with the rotational direction of the second clutch 75b. The two second projections 751b may be symmetrically arranged with respect to the rotational center of the second clutch 75b. Accordingly, a virtual line between the two second projections 751b may pass the rotational center of the second clutch 75b. Meanwhile, the second projections 751b may be provided in an edge area of the second clutch 75b.

FIG. 8 illustrates a state where a liquid flows in the water supply pipe 8. The rotation of the motor in one direction may rotate the wheel 74a and 74b in one direction. The first connecting arm 76a and the second connecting arm 76b provided in the wheels 74a and 74b may contact with the first projections 751a provided in the first clutch 75a.

The first connecting arm 76a and the second connecting arm 76b may rotate the first clutch 75a, while contacting with the first projections, respectively. The rotation of the first clutch 75a may rotate the shaft 73 provided in the first clutch 75a and the rotation of the shaft 73 may rotate the first impeller 77a provided in the first passage pipe 78a. The rotation of the first impeller 77a may facilitate the flow of water through the passage in the water supply pipe 8.

At this time, as the first and second connecting arms 76a and 76b are not in contact with the second projections 751b, the second clutch 75b will not be rotated. As the second impeller 77b is not rotated, no liquid will flow in the water discharge pipe 9.

If a liquid is intended to flow in the water discharge pipe 9, the rotational direction is changed into the reverse direction. If the rotational direction of the motor 72 is changed, the first and second connecting arms 76a and 76b will be collided with the first projections 751, respectively, and then rotated only to contact with the second projections, respectively.

When the first and second connecting arms 76a and 76b contacts with the second projections 751b, respectively, the second clutch 75b may be rotated. The rotation of the second clutch 75b may rotate the shaft 73 provided in the second clutch 75b and the rotation of the shaft 73 may rotate the second impeller 77b provided in the second passage pipe 78b. The rotation of the second impeller 77b may facilitate the flow of water through the passage in the water discharge pipe 9.

At this time, as the first and second connecting arms 76a and 76b are not in contact with the first projections 751a, the first clutch 75a will not be rotated. As the first impeller 77a is not rotated, no liquid will flow in the water supply pipe 8.

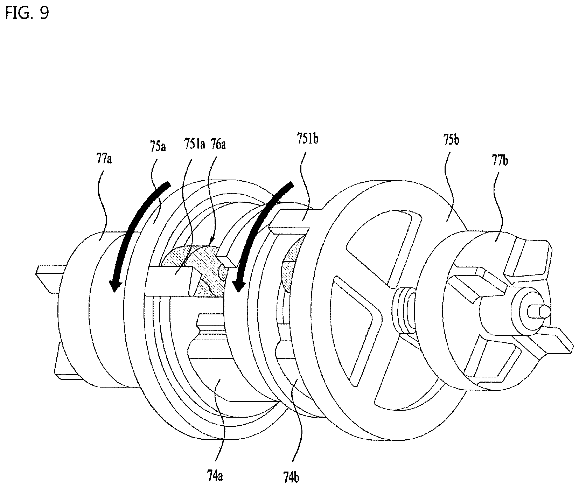

Referring to FIGS. 9 through 11, the specific structure of the connecting arm 76 and the mutual action between the connecting arms 76a and 76b and the projections 751a and 751b will be described.

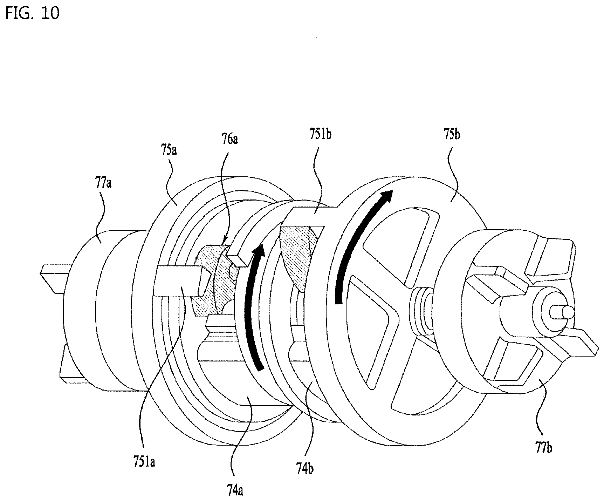

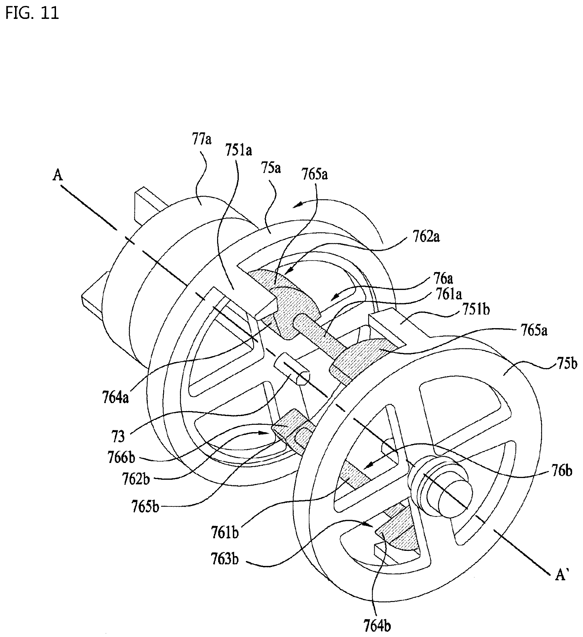

FIG. 9 is a perspective diagram of FIG. 8, viewed from a different angle, and FIG. 10 is a perspective diagram illustrating a state where only the rotational direction is changed. FIG. 11 is a diagram to describe the mutual action between the connecting arms 76a and 76b and the projections 751a and 751b clearly.

Referring to FIG. 11, the specific structure of the connecting arms will be described first. The connecting arms 76 may include the first connecting arm 76a and the second connecting arm 76b and the first and second connecting arms 76a and 76b may have the same shape. Here, the first connecting arm 76a and the second connecting arm 76b may be arranged in symmetrical positions with respect to the rotational axis of the wheel 74.

The first connecting arm 76a may include a connecting bar 761a rotatably provided in the wheel, in parallel with the shaft 73; a first hand 762a provided in one end of the connecting bar 761a and configured to mutually actuate with the first projection 751a; and a second hand 763a provided in the other end of the connecting bar 761a and configured to mutually actuate with the second projection 751b.

The second connecting arm 76b may include a connecting bar 761b rotatably provided in the wheel 74, in parallel with the shaft 73; a first hand 762b provided in one end of the connecting bar 761b and configured to mutually actuate with the first projection 751a; and a second hand 763b provided in the other end of the connecting bar 761b and configured to mutually actuate with the second projection 751b.

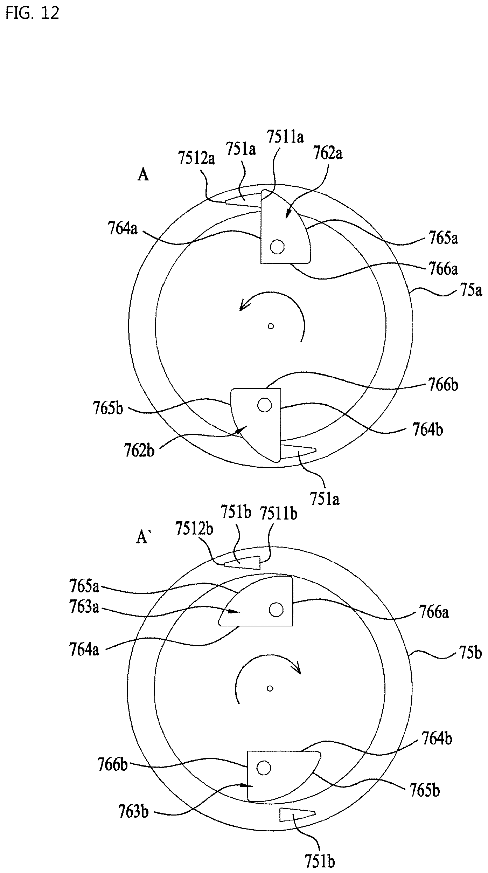

The first hands 762a and 762b and the second hands 763a and 763b may have a predetermined thickness towards the shaft 73. The thickness of the first hands 762a and 762b and the second hands 763a and 763b may have one or more planar surfaces 764a and 764b and one or more curved surfaces 765a and 765b. The planar surfaces 764a and 764b and the curved surfaces 765a and 765b are shown in FIGS. 12 through 14.

In one embodiment shown in FIGS. 12 through 14, the first hands 762a and 762b may include bottom surfaces 766a and 766b; planar surfaces 764a and 764b extended from one ends of each of the bottom surfaces 766a and 766b; and curved surfaces 765a and 765b extended from the other ends of each of the bottom surfaces and connected with the ends of the planar surfaces 764a and 764b.

The connecting bars 761a and 761b may be provided closer to the shaft 73 than the first and second projections 751a and 751b. Accordingly, when the bottom surface 766a of the first hand 762a is directed towards the shaft 73, the end of the planar surface 764a has to have a length enough to contact with the first projection 751a. When a bottom surface 766a of the second hand 763a is directed towards the shaft, one end of the planar surface 764a has to have a length enough to contact the second projection 751b.

Similarly, when the bottom surface 766b of the first hand 762b is directed towards the shaft 73, one end of the planar surface 764b has a length long enough to contact with the first projection 751a. When the bottom surface 766b of the second hand 763b is directed towards the shaft 73, one end of the planar surface 764b may have a length long enough to contact with the second projection 751b.

The width of the bottom surface 766a or 766b may be shorter than a distance between the connecting bar 761a or 761b and the first projection 751a or the second projection 751b. Unless the first hand 762a or 762b contacts with the first projection 751a, one end of the bottom surface 766a or 766b of the first hand is being the farthest from the shaft 73. Unless the second hand 763a or 763b contacts with the second projection 751b, one end of the bottom surface 766a or 766b of the second hand is the farthest from the shaft 73.

At this time, when the length of the bottom surface is longer than the distance between the connecting bar 761a or 761b and the first projection 751a or the second projection 751b, the bottom surface may contact with the first projection 751a or the second projection 751b. Accordingly, it is preferred that the width of the bottom surface is shorter than the distance between the first projection 751a or the second projection 751b and the connecting bar 761a or 761b.

The far end of the bottom surface 766a or 766b may be positioned between the connecting bar 761a or 761b and the first projection 751a or the second projection 751b, when it is the farthest from the shaft 73.

The first hand and the second hand according to one embodiment of the present disclosure may be formed in a similar shape to a shark's fin and have a predetermined thickness. However, the shape is not limited thereto and any shapes may be applicable. The first and second hands may have one or more planar surfaces and one or more curved surfaces.

Meanwhile, the first hand 762a and the second hand 763a that are provided in the first connecting arm 76a may be perpendicular with a virtual line having the bottom surfaces 766a and also perpendicular with a virtual extended line having the planar surfaces 764a. Accordingly, when the first hand 762a contacts with the first projection 751a, the second hand 763a may be perpendicular with the first hand 762a. As the bottom surface 766a is positioned between the shaft 73 and the second projection 751b, the second hand 763a may not contact with the second projection 751b. In other words, the end of the bottom surface 766a (that is positioned farthest from the shaft 73) may not contact with the second projection 751b. In contrast, when the second projection 751b contacts with the second hand 763a, the first projection 751a and the first hand 762a may not contact each other.

Like the first connecting arm 76a, virtual extended surfaces having the bottom surfaces 766b may be perpendicular with each other in the first hand 762b and the second hand 763b provided in the second connecting arm 76b, respectively. Virtual extended surfaces having the planar surfaces 764b may also be perpendicular with each other. Accordingly, when the first hand 762b contacts with the first projection 751a, the second hand 763b may be perpendicular with the first hand 762b. As the bottom surface 766b is positioned between the shaft 73 and the second projection 751b, the second hand 763b may not contact the second projection 751b. In other words, the end of the bottom surface 766b (that is positioned farthest from the shaft 73) may not contact with the second projection 751b. In contrast, when the second projection 751b contacts with the second hand 763b, the first projection 751a and the first hand 762b may not contact with each other.

FIG. 11 illustrates an AA' axis. When viewing A from A' in a state where the bottom surface 766a is directed towards the shaft 73, the planar surface 764a or 764b of the first hand 762a or 762b may be positioned in a counter-clock wise direction with respect to the AA' axis, compared with the curved surfaces 765a or 765b.

When viewing A from A' in a state where the bottom surface 766b is directed towards the shaft 73, the planar surface 764a or 764b of the second hand 763a or 763b may be positioned in a counter-clock wise direction with respect to the AA' axis, compared with the curved surfaces 765a or 765b.

When the wheel 74 is rotated in the counter-clockwise direction with respect to the view of A from A' along the AA' axis as shown in FIG. 11, the planar surface 764a of the first hand 762a and the planar surface 764b of the first hand 762b may contact with the first projections 751a, respectively.

When the wheel 74 is rotated in the clockwise direction in the state of FIG. 11, the planar surface 764a of the first hand 762a may be released from the contact with the first projection 751a and the curved surface 765a of the first hand 762a may be collided with the first projection 751a. The connecting bar 761a may be rotated by the collision. As the first hand 762a and the second hand 763a are perpendicular with each other, the planar surface of the second hand 763a may contact with the second projection 751b. In other words, the second clutch 75b may be rotated. The first hand 762b of the second connecting arm 76b may perform the same operation with the first hand 762a and the second hand 763b may perform the same operation with the second hand 763a. In brief, the second hand 763a or 763b may contact with the second projections 751b, respectively, and the second clutch 75b may be rotated by the contact.

FIGS. 9 and 10 are diagrams illustrating the wheels 74a and 74b. FIG. 9 illustrates a state where the wheel is rotated in the counter-clockwise direction and FIG. 10 illustrates a state where the wheel is rotated in the clockwise direction.

FIG. 9 shows that the planar surface 764a of the first hand 762a rotates the first clutch 75a while contacting with the first projection 751a. In FIG. 10 having the reversed rotational direction, the curved surface 765a of the first hand 762a rotates the connecting bar 761a while colliding with the first projection 751a. Accordingly, the planar surface 764a of the second hand 763a may rotate the second clutch 75b while contacting with the second projection 751b.

FIGS. 12 through 14 illustrate the mutual action between the connecting arm 76 and the projections 751a and 751b as time passes. From a view from A' towards A with respect to the AA' axis of FIG. 11, the mutual action between the first clutch 75a and the first hand 762a or 762b is shown in an upper area. From a view of A towards A', the mutual action between the second clutch 75b and the second hand 763a or 763b is shown in a lower area. In other words, the device in the region A along the AA' axis of FIG. 11 is shown in the upper area of FIG. 12 and the device in the region A' along the AA' axis is shown in the lower area of FIG. 12.

Referring to FIG. 12, the specific structure of the first and second projections 751a and 751b will be described in detail.

The first projection 751a includes a contact surface 7511a corresponding to a surface contacting with the planar surface 764a or 764b of the first hand 762a or 762b; and a collision surface 7512a corresponding to a surface colliding with the curved surface 765a or 765b of the first hand 762a or 762b.

The contact surface 7511a has a larger area than the collision surface 7512a in order to transmit the rotational force to the first clutch 75a from the planar surface 764a or 764 of the first hand 762a or 762b stably.

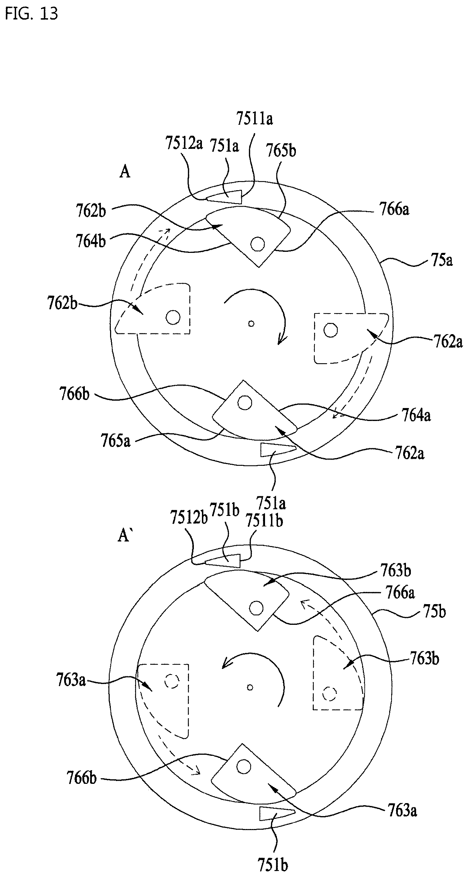

In contrast, the collision surface 7512a may have a small area in order to rotate the connecting bar 761a by applying a strong shock to the curved surface 765a or 765b of the first hand 762a or 762b. The curved surface 765a or 765b colliding with the collision surface 7512a is curved such that friction with the collision surface 7512a may occur, which is shown in FIG. 13 specifically.

The first projection 751a includes a contact surface 7511b corresponding to a surface contacting with the planar surface 764a or 764b of the second hand 763a or 763b; and a collision surface 7512b corresponding to a surface colliding with the curved surface 765a or 765b of the second hand 763a or 763b.

The contact surface 7511b has a larger area than the collision surface 7512b in order to transmit the rotational force to the second clutch 75b from the planar surface 764a or 764 of the second hand 763a or 763b stably.

In contrast, the collision surface 7512b may have a small area in order to rotate the connecting bar 761b by applying a strong shock to the curved surface 765a or 765b of the second hand 763a or 763b. The curved surface 765a or 765b colliding with the collision surface 7512b is curved such that friction with the collision surface 7512b may occur, which is shown in FIG. 13 specifically.

FIG. 12 illustrates that the wheel 74 is rotated in the counter-clockwise direction, viewed from A' towards A with respect to the AA' axis like FIGS. 9 and 11. An upper drawing and a lower drawing show that the rotational directions are reversed. That is a difference whether the direction of view is from A' towards A or from A towards A' but the wheel is substantially rotated in the same direction.

Referring to the drawing towards A, the first hand 762a or 762b contacts with the contact surface 7511a of the first projection 751a and it is shown that the rotational force of the wheel 74 is transmitted to the first clutch 75a via the first hand 762a or 762b and the first projection 751a.

Referring to the drawing towards A', the second hand 763a or 763b may not contact with the second projection 751b. The first hand 762a and the second hand 763a are perpendicular with each other. Accordingly, only when the wheel 74 is continuously rotated in the counter-clockwise direction, viewed from A' towards A shown in FIG. 12, the rotational force of the wheel 74 may be transmitted only to the first clutch 75a.

Compared with FIG. 12, FIG. 13 shows a state where the rotational direction of the wheel 74 is changed into the clockwise direction with respect to the AA' direction from A' towards A.

The state of A area (that is, the upper drawing) of FIG. 12 where the first hand 762a or 762b is rotated 90 degrees with respect to the shaft 73 in the clockwise direction is shown in FIG. 13 in a dotted line. The state where the wheel is rotated 90 degrees again is shown in a solid line.

Right after the rotational direction of the wheel 74 is changed, the connecting bar 761a will not be rotated until the curved surface 765a or 765b of the first hand is collided with the collision surface 7512a. However, when the planar surface 764a or 764b of the first hand is released from the contact with the contact surface 7511a provided in the first projection 751a and rotated 180 degrees with respect to the shaft 73, the collision surface 7512a provided in the first projection 751a and the curved surface 765a or 765b are collided with each other.

As shown in the upper drawing of FIG. 13, the connecting bar 761a may be rotated by the collision and the first hand 762a or 762b may be rotated a preset angle. The second hand 763a connected with the first hand 762a and the second hand 763b connected with the first hand 762b may be rotated as much as the first hand is rotated a preset angle.

The second hand 763a or 763b shown in the A' area of FIG. 13 (the lower drawing) may continuously keep a non-contact state with the second projection 751b. The state where the second hand is rotated 90 degrees with respect to the shaft 73 in the clockwise direction is shown in a dotted line of FIG. 13. The state where the wheel is rotated 90 degrees again is shown in a solid line. That reason why the second hand shown in the solid line is rotated a preset angle is that the first hand is collided with the collision surface 7512a of the first projection.

The rotation of the first hand may rotate the connecting bars 761a and 761b and then the second hand. Accordingly, when the second hand is rotated 180 degrees with respect to the shaft 73, the second hand is in a state shown in a lower drawing of FIG. 13.

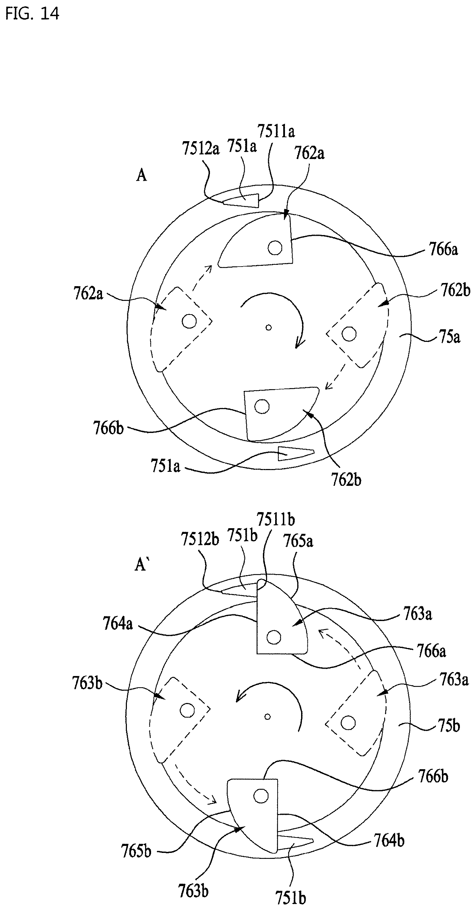

FIG. 14 illustrates a state where both of the first and second hands are rotated on the shaft 73 180 degrees, compared with FIG. 13. A dotted line of FIG. 14 shows a state where the hands are rotated 90 degrees from the state shown in the dotted line of FIG. 13 and a solid line shows a state where they are rotated 80 degrees from the state shown in the solid line of FIG. 13.

Referring to A area of FIG. 14 (an upper drawing of FIG. 14), the first hand 762a or 762b rotated 90 degrees from the solid line of FIG. 13 is shown in the same shape with the solid line of FIG. 13. In FIG. 13. The first hand keeps the same shape before being rotated 180 degrees after colliding with the collision surface 7512a. That is equal to the second hand 763a or 763b shown in A' area (a lower drawing).

Meanwhile, when the wheel 74 is rotated 90 degrees more as shown in A area of FIG. 14 in a solid line from a dotted line, the connecting bar 761a may be rotated a preset angle more. In other words, the final position of the first hand in A area drawing is equal to the initial position of the second hand shown in FIG. 12.

The reason for the rotation shown in A area of FIG. 14 will be described referring to A' area of FIG. 14.

When the second hand is rotated 90 degrees from the state shown in a solid line corresponding to the final position in A' area of FIG. 13, the position is changed into a position shown in a dotted line of A' area of FIG. 14. In this instance, when it is rotated 90 degrees more, the position is changed into a position shown in a solid line of A' area of FIG. 14. At this time, a point at which the planar surface 764a or 764b meets the curved surface 765a or 765b may be positioned in an area that allows the contact with the contact surface 7511b of the second projection 751b. Specifically, in FIG. 13, the rotation of the connecting bar 761a or 761b may rotate the second hand to a position that facilitates the contact with the contact surface 7511a of the second projection.

When the second hand is continuously rotated, the planar surface 764a or 764b of the second hand may completely contact with the contact surface 7511b of the second projection. In other words, the second hand shown in A' area of FIG. 14 is located at the same position with the position of the first hand shown in FIG. 12.

In brief, the change of the rotational direction may facilitate the contact between the planar surface 764a or 764b of the second hand and the contact surface 7511b of the second projection. The rotational force of the wheel 74 may be transmitted to the second clutch 75b via the second hand. In contrast, the first hand may not contact the first projection and the first clutch 75a may not be rotated.

When the rotational direction of the wheel 74 is changed again from the final state of FIG. 14, the first and second hands are rotated in the same manner with the operation described referring to FIGS. 12 through 14. Accordingly, the first hand may rotate the first projection 751a and the second hand may not contact with the second projection 751b.

Either the liquid inside the water supply pipe 8 or the water discharge pipe 9 may flow based on the rotational direction of the motor 72. The independent cycle of each passage is performed by only changing the rotational direction of the motor 72. Accordingly, compared with the conventional clothes treating apparatus using the two pumps (including even the two motors), the energy may be saved. Only one motor 72 may be used and that is advantageous in utilizing the overall space of the clothes treating apparatus. Also, only one motor 72 may be used and the material cost may be saved advantageously.

## Claims

1. A pump assembly (7) configured to generate flow of water inside a water supply pipe (8) and a water discharge pipe (9) that are provided in a clothes treating apparatus (100), using rotation of a motor (72), the pump assembly (7) comprising:
a first passage pipe (78a) connectable with the water supply pipe (8);
a second passage pipe (78b) connectable with the water discharge pipe (9),
wherein the pump assembly (7) comprises:
a wheel (74) that is rotatable by the motor (72);
a pair of clutches (75a, 75b) provided in both sides of the wheel (74), respectively, wherein the pair of the clutches (75a, 75b) have the same rotational center with the wheel (74) and are configured to be independently rotatable with respect to the wheel (74);
a pair of shafts (73) fixed to rotational centers of the clutches (75a, 75b), respectively;
a first and second impeller (77a, 77b) connected with each of the shafts (73), respectively, and rotatable according to the rotation of the clutches (75a, 75b); and
a connecting arm (76) configured to transmit a rotational force of the wheel (74) to the clutches (75a, 75b);
**characterized in that**
the connecting arm (76) is rotatably provided in the wheel (74), and **in that** a rotation range of the connecting arm (76) is limited to transmit the rotational force of the wheel (74) to one of the clutches (75a, 75b) based on the rotational direction of the motor (72),
wherein the pair of clutches (75a, 75b) comprises a pair of projections (751a, 751b) respectively projected toward the wheel and configured to contact with the connecting arm (76).

2. The pump assembly (7) of claim 1, wherein the pair of the clutches (75a, 75b) comprises:
a first clutch (75a) provided in one side of the wheel (74); and
a second clutch (75b) provided in the other side of the wheel (74), and
the connecting arm (76) includes a first connecting arm (76a) and a second connecting arm (76b) that are spaced a preset distance apart from the rotational center of the wheel (74) and symmetrically arranged with respect to the rotational center.

3. The pump assembly (7) of claim 2, wherein each of the connecting arms (76a, 76b) comprises:
a connecting bar (761a, 761b) rotatably coupled to the wheel (74) and provided in parallel with the shaft (73);
a first hand (762a, 762b) provided in one end of the connecting bar (761a, 761b); and
a second hand (763a, 763b) provided in the other end of the connecting bar (761a, 761b), and
wherein the first hands (762a, 762b) rotate the first clutch (75a) by contacting with the first clutch (75a), and the second hands (763a, 763b) rotate the second clutch (75b) by contacting with the second clutch (75b).

4. The pump assembly (7) of claim 3, wherein when the motor (72) is rotated in one direction, the first hands (762a, 762b) contact with the first clutch (75a) and the second hands (763a, 763b) do not contact with the second clutch (75b), and
when the motor (72) is rotated in the reverse direction, the first hands (762a, 762b) do not contact with the first clutch (75a) and the second hands (763a, 763b) contact with the second clutch (75a).

5. The pump assembly (7) of claim 3, wherein the pair of projections (751a, 751b) comprises a first projection (751a) projected towards the wheel (74) from the first clutch (75a) and contactable with the first hands (762a, 762b), and
a second projection (751b) projected towards the wheel (74) from the second clutch (75b) and contactable with the second hands (763a, 763b).

6. The pump assembly (7) of claim 5 wherein two first projections (751a) are symmetrically provided with respect to the rotational center of the first clutch (75a), and two second projections (751b) are symmetrically provided with respect to the rotational center of the second clutch (75b).

7. The pump assembly (7) of claim 5, wherein each of the first and second projections (751a, 751b) comprises,
a contact surface (7511a, 7511b) that is contactable with the first hands (762a, 762b) or the second hands (763a, 763b); and
a collision surface (7512a, 7512b) provided to collide with the first hands (762a, 762b) or the second hands (763a, 763b).

8. The pump assembly (7) of claim 7, wherein a planar surface (764a, 764b) of the first hands (762a, 762b) and a planar surface (764a, 764b) of the second hands (763a, 763b) are perpendicular to each other with respect to one of the connecting arms (76a, 76b).

9. The pump assembly (7) of claim 8, wherein the planar surface (764a, 764b) is provided in a predetermined area and each of the first and second hands (762a, 762b, 763a, 763b) further comprises a curved surface (765a, 765b) provided in the other area.

10. The pump assembly (7) of claim 9, wherein when the wheel (74) is rotated in one direction, the planar surfaces (764a, 764b) of the first hands (762a, 762b) contact with the contact surfaces (7511a) of the first projections (751a), respectively, and the second hands (763a, 763b) do not contact with the second projections (751b).

11. The pump assembly (7) of claim 10, wherein when the wheel (74) is rotated in the reverse direction opposite to the one direction, the planar surfaces (764a, 764b) of the second hands (763a, 763b) contact with the contact surfaces (7511b) of the second projections (751b) and the first hands (762a, 762b) do not contact with the first projections (751a).

12. The pump assembly (7) of claim 10, wherein when the wheel (74) is rotated in the reverse direction opposite to the one direction after rotated in one direction for a preset time period, the curved surfaces (765a, 765b) of the first hands (762a, 762b) collide with the collision surfaces (7512a) of the first projections (751a) and the connecting bars (761a, 761b) are then rotated.

13. The pump assembly (7) of claim 12, wherein when the wheel (74) is rotated in the reverse direction, the collision surface (7512a) of the first projections (751a) facilitate rotation of the connecting bars (761a, 761b) so that the planar surfaces (764a, 764b) of the second hands (763a, 763b) and the contact surfaces (7511b) of the second projections (751b) contact.

14. A clothes treating apparatus (100) comprising a clothes-accommodation unit (3) configured to accommodate clothes or laundry, the clothes treating apparatus (100) comprising:
a water supply pipe (8) provided to supply water to the inside of the clothes treating apparatus (100);
a water discharge pipe (9) provided to discharge the water outside from the clothes treating apparatus (100); and
a pump assembly (7) according to any one of claims 1 to 13.

## Patentansprüche

1. Pumpenbaugruppe (7), die konfiguriert ist, mittels der Drehung (5) eines Motors (72) einen Wasserstrom in einer Wasserversorgungsleitung (8) und einer Wasserablaufleitung (9), die in einer Kleiderbehandlungsvorrichtung (100) vorgesehen sind, zu erzeugen, wobei die Pumpenbaugruppe (7) aufweist:
ein erstes Durchleitungsrohr (78a), das mit der Wasserversorgungsleitung (8) verbindbar ist;
ein zweites Durchleitungsrohr (78b), das mit der Wasserablaufleitung (9) verbindbar ist,
wobei die Pumpenbaugruppe (7) aufweist:
ein Rad (74), das durch den Motor (72) drehbar ist;
ein Paar von Kupplungen (75a, 75b), die jeweils auf beiden Seiten des Rads (74) vorgesehen sind,
wobei das Paar von Kupplungen (75a, 75b) mit dem Rad (74) den gleichen Drehmittelpunkt hat und konfiguriert ist, unabhängig vom Rad (74) drehbar zu sein;
ein Paar von Wellen (73), die jeweils an den Drehmittelpunkten der Kupplungen (75a, 75b) befestigt sind;
ein erstes und ein zweites Flügelrad (77a, 77b), die j eweils mit den Wellen (73) verbunden und entsprechend der Drehung der Kupplungen (75a, 75b) drehbar sind; und
einen Verbindungsarm (76), der konfiguriert ist, eine Rotationskraft des Rads (74) auf die Kupplungen (75a, 75b) zu übertragen;
**dadurch gekennzeichnet, dass**
der Verbindungsarm (76) drehbar in dem Rad (74) vorgesehen ist, und ein Drehbereich des Verbindungsarms (76) begrenzt ist, um die Drehkraft des Rads (74) auf eine der Kupplungen (75a, 75b) basierend auf der Drehrichtung des Motors (72) zu übertragen,
wobei das Paar von Kupplungen (75a, 75b) ein Paar von Vorsprüngen (751a, 751b) aufweist die jeweils in Richtung des Rads hervorstehen und konfiguriert sind, mit dem Verbindungsarm (76) in Kontakt zu kommen.

2. Pumpenbaugruppe (7) nach Anspruch 1, wobei das Paar der Kupplungen (75a, 75b) aufweist:
eine erste Kupplung (75a), die in einer Seite des Rads (74) vorgesehen ist; und
eine zweite Kupplung (75b), die in der anderen Seite des Rads (74) vorgesehen ist, und
der Verbindungsarm (76) einen ersten Verbindungsarm (76a) und einen zweiten Verbindungsarm (76b) aufweist, die in einem vorgegebenen Abstand zum Drehmittelpunkt des Rads (74) und symmetrisch bezüglich des Drehmittelpunkts angeordnet sind.

3. Pumpenbaugruppe (7) nach Anspruch 2, wobei ein jeder der Verbindungsarme (76a, 76b) aufweist:
eine Verbindungsstange (761a, 761b), die drehbar mit dem Rad (74) gekoppelt ist und parallel zu der Welle (73) vorgesehen ist;
einen ersten Keil (762a, 762b), der in einem Ende der Verbindungsstange (761a, 761b) vorgesehen ist; und
einen zweiten Keil (763a, 763b), der in dem anderen Ende der Verbindungsstange (761a, 761b) vorgesehen ist, und
wobei die ersten Keile (762a, 762b) die erste Kupplung (75a) durch Kontakt mit der ersten Kupplung (75a) drehen, und die zweiten Keile (763a, 763b) die zweite Kupplung (75b) durch Kontakt mit der zweiten Kupplung (75b) drehen.

4. Pumpenbaugruppe (7) nach Anspruch 3, wobei, wenn der Motor (72) in eine Richtung gedreht wird, die ersten Keile (762a, 762b) mit der ersten Kupplung (75a) in Kontakt kommen und die zweiten Keile (763a, 763b) nicht mit der zweiten Kupplung (75b) in Kontakt kommen, und
wenn der Motor (72) in entgegengesetzter Richtung gedreht wird, die ersten Keile (762a, 762b) nicht mit der ersten Kupplung (75a) in Kontakt kommen und die zweiten Keile (763a, 763b) mit der zweiten Kupplung (75a) in Kontakt kommen.

5. Pumpenbaugruppe (7) nach Anspruch 3, wobei das Paar von Vorsprüngen (751a, 751b) einen ersten Vorsprung (751a) aufweist, der von der ersten Kupplung (75a) zum Rad (74) hin hervorsteht und mit den ersten Keilen (762a, 762b) in Kontakt kommen kann, und
einen zweiten Vorsprung (751b), der von der zweiten Kupplung (75b) zum Rad (74) hin hervorsteht und mit den zweiten Keilen (763a, 763b) in Kontakt kommen kann.

6. Pumpenbaugruppe (7) nach Anspruch 5, wobei zwei erste Vorsprünge (751a) symmetrisch bezüglich des Drehmittelpunkts der ersten Kupplung (75a) vorgesehen sind und zwei zweite Vorsprünge (751b) symmetrisch bezüglich des Drehmittelpunkts der zweiten Kupplung (75b) vorgesehen sind.

7. Pumpenbaugruppe (7) nach Anspruch 5, wobei ein jeder von den ersten und zweiten Vorsprüngen (751a, 751b) aufweist,
eine Kontaktfläche (7511a, 7511b), die mit den ersten Keilen (762a, 762b) oder den zweiten Keilen (763a, 763b) in Kontakt kommen kann; und
eine Kollisionsfläche (7512a, 7512b), die vorgesehen ist, um mit den ersten Keilen (762a, 762b) oder den zweiten Keilen (763a, 763b) zusammenzustoßen.

8. Pumpenbaugruppe (7) nach Anspruch 7, wobei eine ebene Fläche (764a, 764b) der ersten Keile (762a, 762b) und eine ebene Fläche (764a, 764b) der zweiten Keile (763a, 763b) senkrecht zueinander bezüglich einem der Verbindungsarme (76a, 76b) sind.

9. Pumpenbaugruppe (7) nach Anspruch 8, wobei die ebene Fläche (764a, 764b) in einem vorbestimmten Bereich vorgesehen ist und ein jeder von den ersten und zweiten Keilen (762a, 762b, 763a, 763b) weiterhin eine gekrümmte Fläche (765a, 765b) aufweist, die in dem anderen Bereich vorgesehen ist.

10. Pumpenbaugruppe (7) nach Anspruch 9, wobei jeweils die ebenen Flächen (764a, 764b) der ersten Keile (762a, 762b) in Kontakt mit den Kontaktflächen (7511a) der ersten Vorsprünge (751a) kommen und die zweiten Keile (763a, 763b) nicht mit den zweiten Vorsprüngen (751b) in Kontakt kommen, wenn das Rad (74) in eine Richtung gedreht wird.

11. Pumpenbaugruppe (7) nach Anspruch 10, wobei die ebenen Flächen (764a, 764b) der zweiten Keile (763a, 763b) mit den Kontaktflächen (7511b) der zweiten Vorsprünge (751b) in Kontakt kommen und die ersten Keile (762a, 762b) nicht mit den ersten Vorsprüngen (751a) in Kontakt kommen, wenn das Rad (74) in der entgegengesetzten Richtung entgegen der einen Richtung gedreht wird.

12. Pumpenbaugruppe (7) nach Anspruch 10, wobei, wenn das Rad (74) in der entgegengesetzten Richtung entgegen der einen Richtung gedreht wird, nachdem es für eine voreingestellte Zeitdauer in eine Richtung gedreht wurde, die gekrümmten Flächen (765a, 765b) der ersten Keile (762a, 762b) mit den Kollisionsflächen (7512a) der ersten Vorsprünge (751a) zusammenstoßen und dann werden die Verbindungsstangen (761a, 761b) gedreht.

13. Pumpenbaugruppe (7) nach Anspruch 12, wobei die Kollisionsfläche (7512a) der ersten Vorsprünge (751a) das Drehen der Verbindungsstangen (761a, 761b) erleichtert, sodass die ebenen Flächen (764a, 764b) der zweiten Keile (763a, 763b) und die Kontaktflächen (751b) der zweiten Vorsprünge (751b) in Kontakt kommen, wenn das Rad (74) in der entgegengesetzten Richtung gedreht wird.

14. Wäschebehandlungsvorrichtung (100), die eine Wäscheaufnahmeeinheit (3) aufweist, die konfiguriert ist, Kleidung oder Wäsche aufzunehmen, wobei die Wäschebehandlungsvorrichtung (100) aufweist:
eine Wasserversorgungsleitung (8), die vorgesehen ist, um Wasser in das Innere der Wäschebehandlungsvorrichtung (100) zu leiten;
eine Wasserablaufleitung (9), die vorgesehen ist, um Wasser aus der Wäschebehandlungsvorrichtung (100) nach außen abzuleiten; und
eine Pumpenbaugruppe (7) nach einem der Ansprüche 1 bis 13.

## Revendications

1. Assemblage de pompe (7) configuré pour générer un écoulement d'eau à l'intérieur d'un tube d'alimentation d'eau (8) et d'un tube d'évacuation d'eau (9) qui sont prévus dans un appareil de traitement de vêtements (100), en utilisant une rotation d'un moteur (72), l'assemblage de pompe (7) comprenant :
un premier tube de passage (78a) pouvant être connecté au tube d'alimentation d'eau (8) ;
un second tube de passage (78b) pouvant être connecté au tube d'évacuation d'eau (9),
dans lequel l'assemblage de pompe (7) comprend :
une roue (74) qui peut être mise en rotation par le moteur (72) ;
une paire d'embrayages (75a, 75b) prévus dans les deux côtés de la roue (74), respectivement,
dans lequel la paire d'embrayages (75a, 75b) ont le même centre de rotation que la roue (74) et sont configurés de façon être mis en rotation indépendamment par rapport à la roue (74) ;
une paire d'arbres (73) fixés à des centres de rotation des embrayages (75a, 75b), respectivement ;
un premier et un second propulseur (77a, 77b) connectés à chacun des arbres (73), respectivement, et pouvant être mis en rotation en fonction de la rotation des embrayages (75a, 75b) ; et
un bras de connexion (76) configuré pour transmettre une force de rotation de la roue (74) aux embrayages (75a, 75b) ;
**caractérisé en ce que**
le bras de connexion (76) est prévu en rotation dans la roue (74), et **en ce qu'**une plage de rotation du bras de connexion (76) est limitée pour transmettre la force de rotation de la roue (74) à l'un des embrayages (75a, 75b) sur la base de la direction de rotation du moteur (72),
dans lequel la paire d'embrayages (75a, 75b) comprend une paire de projections (751a, 751b) qui se projettent respectivement vers la roue et sont configurées pour venir en contact avec le bras de connexion (76).

2. Assemblage de pompe (7) selon la revendication 1, dans lequel la paire d'embrayages (75a, 75b) comprend :
un premier embrayage (75a) prévu dans un côté de la roue (74) ; et
un second embrayage (75b) prévu dans l'autre côté de la roue (74), et
le bras de connexion (76) inclus un premier bras de connexion (76a) et un second bras de connexion (76b) qui sont espacés à raison d'une distance prédéfinie en éloignement du centre de rotation de la roue (74) et qui sont agencés de manière symétrique par rapport au centre de rotation.

3. Assemblage de pompe (7) selon la revendication 2, dans lequel chacun des bras de connexion (76a, 76b) comprend :
une barre de connexion (761a, 761b) couplée en rotation à la roue (74) et prévue en parallèle à l'arbre (73);
une première patte (762a, 762b) prévue dans une extrémité de la barre de connexion (761a, 761b) ; et
une seconde patte (763a, 763b) prévue dans l'autre extrémité de la barre de connexion (761a, 761b), et
dans lequel les premières pattes (762a, 762b) mettent en rotation le premier embrayage (75a) en venant en contact avec le premier embrayage et les secondes pattes (763a, 763b) mettent en rotation le second embrayage (75b) en venant en contact avec le second embrayage (75b).

4. Assemblage de pompe (7) selon la revendication 3, dans lequel, quand le moteur (72) est mis en rotation dans une direction, les premières pattes (762a, 762b) viennent en contact avec le premier embrayage (75a) et les secondes pattes (763a, 763b) ne viennent pas en contact avec le second embrayage (75b), et
quand le moteur (72) est mis en rotation dans la direction inverse, les premières pattes (762a, 762b) ne viennent pas en contact avec le premier embrayage (75a) et les secondes pattes (763a, 763b) viennent en contact avec le second embrayage (75a).

5. Assemblage de pompe (7) selon la revendication 3, dans lequel la paire de projections (751a, 751b) comprend une première projection (751a) en projection vers la roue (74) depuis le premier embrayage (75a) et pouvant être mise en contact avec les premières pattes (762a, 762b), et
une seconde projection (751b) en projection vers la roue (74) depuis le second embrayage (75b) et pouvant être mise en contact avec les secondes pattes (763a, 763b).

6. Assemblage de pompe (7) selon la revendication 5, dans lequel deux premières projections (751a) sont prévues de manière symétrique par rapport au centre de rotation du premier embrayage (75a), et deux secondes projections (751b) sont prévues de manière symétrique par rapport au centre de rotation du second embrayage (75b).

7. Assemblage de pompe (7) selon la revendication 5, dans lequel chacune de la première et de la seconde projection (751a, 751b) comprend
une surface de contact (7511a, 7511b) qui peut être mise en contact avec les premières pattes (762a, 762b) ou les secondes pattes (763a, 763b) ; et
une surface de collision (7512a, 7512b) prévue pour entrer en collision avec les premières pattes (762a, 762b) ou les secondes pattes (763a, 763b).

8. Assemblage de pompe (7) selon la revendication 7, dans lequel une surface planaire (764a, 764b) des premières pattes (762a, 762b) et une surface planaire (764a, 764b) des secondes pattes (763a, 763b) sont perpendiculaires l'une à l'autre par rapport à l'un des bras de connexion (76a, 76b).

9. Assemblage de pompe (7) selon la revendication 8, dans lequel la surface planaire (764a, 764b) est prévue dans une zone prédéterminée et chacune de la première et de la seconde patte (762a, 762b, 763a, 763b) comprend en outre une surface incurvée (765a, 765b) prévue dans l'autre zone.

10. Assemblage de pompe (7) selon la revendication 9, dans lequel, quand la roue (74) est mise en rotation dans une direction, les surfaces planaires (764a, 764b) des premières pattes (762a, 762b) viennent en contact avec les surfaces de contact (7511a) des premières projections (751a), respectivement, et les secondes pattes (763a, 763b) ne viennent pas en contact avec les secondes projections (751b).

11. Assemblage de pompe (7) selon la revendication 10, dans lequel, quand la roue (74) est mise dans une direction inverse opposée à ladite une direction, les surfaces planaires (764a, 764b) des secondes pattes (763a, 763b) viennent en contact avec les surfaces de contact (7511b) des secondes projections (751b) et les premières pattes (762a, 762b) ne viennent pas en contact avec les premières projections (751a).

12. Assemblage de pompe (7) selon la revendication 10, dans lequel, quand la roue (74) est mise en rotation dans la direction inverse opposée à ladite une direction après avoir été mise en rotation dans ladite une direction pendant un laps de temps prédéfini, les surfaces incurvées (765a, 765b) des premières pattes (762a, 762b) entrent en collision avec les surfaces de collision (7512a) des premières projections (751a) et les barres de connexion (761a, 761b) sont alors mises en rotation.

13. Assemblage de pompe (7) selon la revendication 12, dans lequel, quand la roue (74) est mise en rotation dans la direction inverse, la surface de collision (7512a) des premières projections (751a) facilite une rotation des barres de connexion (761a, 761b) de sorte que les surfaces planaires (764a, 764b) des secondes pattes (763a, 763b) et les surfaces de contact (7511b) des secondes projections (751b) viennent en contact.

14. Appareil de traitement de vêtements (100) comprenant une unité de réception de vêtements (3) configurée pour recevoir des vêtements ou du linge, l'appareil de traitement de vêtements (100) comprenant :
un tube d'alimentation d'eau (8) prévu pour alimenter de l'eau jusqu'à l'intérieur de l'appareil de traitement de vêtements (100) ;
un tube d'évacuation d'eau (9) prévu pour évacuer l'eau à l'extérieur de l'appareil de traitement de vêtements (100) ; et
un assemblage de pompe (7) selon l'une quelconque des revendications 1 à 13.
